# DEMANDE DE BREVET EUROPEEN

(11) **EP 3 492 894 A1**
(43) Date de publication de la demande: **05.06.2019**
(21) Numéro de dépôt: 18209892.1
(22) Date de dépôt: 03.12.2018
(51) Int. Cl.: G01J 5/34, G06K 9/00

(54) **CAPTEUR DE MOTIF THERMIQUE A CAPACITE PYROELECTRIQUE**

(30) Priorité: 04.12.2017 FR 1761602
(71) Demandeur: Commissariat à l'énergie atomique et aux énergies alternatives, 75015 Paris (FR)
(72) Inventeur: BENWADIH, Mohammed, 94500 CHAMPIGNY SUR MARNE (FR); REVAUX, Amélie, 38500 VOIRON (FR)
(74) Mandataire: Brevalex

(57) **Abrégé**

Capteur (100) de motif thermique comportant plusieurs pixels (102) disposés sur un substrat (104), chaque pixel (102) comprenant au moins une capacité pyroélectrique formée par au moins une portion (106) de matériau pyroélectrique disposée entre au moins une électrode inférieure (108) et au moins une électrode supérieure (110), avec l'électrode inférieure (108) disposée entre le substrat (104) et la portion (106) de matériau pyroélectrique, et dans lequel au moins une couche de protection diélectrique (200) est disposée entre la portion (106) de matériau pyroélectrique et l'électrode supérieure (110) et comporte au moins l'un des matériaux suivants : fluoropolymère, couche mono-moléculaire auto-assemblée, matériau diélectrique soluble dans un solvant orthogonal au matériau pyroélectrique.

## Description

### DOMAINE TECHNIQUE ET ART ANTÉRIEUR

L'invention se rapporte à un capteur de motif thermique, exploitant les propriétés de pyroélectricité d'un matériau, et formant avantageusement un capteur d'empreinte digitale.

La détection d'empreinte digitale peut être réalisée par des capteurs dits « passifs » exploitant une différence de températures entre celle du doigt et celle du capteur, comme décrit dans les documents US 4 394 773, US 4 429 413 et US 6 289 114. Au niveau des crêtes de l'empreinte, la peau du doigt est en contact physique direct avec le capteur. Un transfert thermique entre la peau et la surface de contact du capteur s'effectue par conduction, ce qui conduit à une première variation temporelle de température. Au niveau des vallées de l'empreinte, la peau du doigt n'est pas en contact physique direct avec le capteur. Un transfert thermique entre la peau et la surface de contact du capteur s'effectue à travers l'air qui est plutôt un isolant thermique, ce qui conduit à une seconde variation temporelle de température, moins importante. La différence entre ces deux variations temporelles de température se traduit par une différence entre des signaux mesurés par les capacités pyroélectriques, selon qu'elles se trouvent sous une vallée ou sous une crête de l'empreinte. L'image de l'empreinte présente donc un contraste qui dépend de cette différence.

Cependant, ces capteurs ont pour inconvénient de réaliser une mesure qui dépend uniquement de la différence entre la température du doigt et la température du capteur. Ainsi, après quelques secondes de contact entre le doigt et le capteur, la température du doigt et la température de la surface de contact du capteur s'homogénéisent, et il n'est plus possible d'obtenir un contraste satisfaisant. Il peut également arriver que le niveau du signal obtenu soit nul lorsque le doigt et le capteur sont à la même température, ou encore que le contraste des images capturées varie, ce qui pose alors des problèmes lors du traitement ultérieur des images obtenues (par exemple, une inversion des températures entraîne une inversion de l'image obtenue).

Un autre type de capteur, de type actif, offre une solution à ce problème grâce à l'ajout d'éléments chauffants sous la surface de contact du capteur. Un tel capteur est décrit par exemple dans la demande de brevet EP 2 385 486 A1. Les éléments chauffants dissipent une certaine quantité de chaleur dans chaque pixel du capteur et l'échauffement des pixels est mesuré au bout d'un certain temps. La variation de température obtenue est donc importante au niveau des vallées de l'empreinte, où la chaleur est transférée au doigt à travers l'air, et plus faible au niveau des crêtes de l'empreinte, où la chaleur est transférée directement au doigt, par conduction. Cela conduit à une température finale plus faible dans le cas d'un pixel en présence d'une crête de l'empreinte, où la chaleur est absorbée par la peau, par rapport à un pixel en présence d'une vallée de l'empreinte où la chaleur est plutôt conservée dans le pixel. Cela permet d'améliorer et de conserver au cours du temps, le contraste d'une image acquise à l'aide dudit capteur.

Les éléments décrits ci-dessus pour la détection d'empreinte digitale s'appliquent également à la détection d'un motif thermique autre qu'une empreinte digitale, l'élément dont le motif thermique à détecter étant disposé sur le capteur lors de la mesure.

Un capteur de motif thermique comporte des moyens de détection thermique qui peuvent être des éléments pyroélectriques, des diodes, des thermistances ou tout autre élément sensible à la température permettant de convertir une variation de température en une variation de potentiel ou de courant électrique.

Plus particulièrement, un capteur de type pyroélectrique comporte une matrice de capacités pyroélectriques disposées sur un substrat, par exemple en verre.

Chaque capacité pyroélectrique comporte une couche en matériau pyroélectrique, disposée entre une électrode inférieure et une électrode supérieure. Une de ces deux électrodes est portée à un potentiel constant, et forme une électrode de référence. L'autre électrode collecte des charges pyroélectriques, générées par le matériau pyroélectrique en réponse à une variation de température. L'électrode supérieure est recouverte d'une couche de protection sur laquelle l'élément dont le motif thermique est mesuré, par exemple un doigt, est destiné à être disposé lors de la mesure.

Le matériau pyroélectrique peut être par exemple un poly(fluorure de vinylidène-trifluoroéthylène) ou P(VDF-TrFE) ou encore PVDF (polyfluorure de vinylidène), une céramique telle que du PZT (titano-zirconate de plomb, ou « Lead Zirconate Titanate » en anglais), de l'AIN, du BaTiO₃ ou encore du ZnO. D'autres matériaux pyroélectriques sont possibles, à savoir tous ceux qui produisent des charges électriques en fonction d'un paramètre pyroélectrique.

Dans le cas d'un capteur thermique actif, le capteur est également muni d'un élément chauffant généralement réalisé à partir de la même couche électriquement conductrice que celle servant à réaliser l'électrode supérieure. Cet élément chauffant est par exemple réalisé sous la forme d'un serpentin entourant partiellement les électrodes supérieures et permettant de chauffer latéralement les capacités pyroélectriques, au niveau des électrodes supérieures.

Chaque capacité pyroélectrique forme un transducteur qui traduit une variation temporelle de température en un signal électrique tel qu'une différence de potentiels électriques.

Lorsque le capteur doit avoir une surface importante et être réalisé avec un faible coût, il est avantageusement réalisé en technologie dite imprimée, ou par impression, moins onéreuse que la lithographie sur semi-conducteur. Différentes portions de matériaux formant les éléments des pixels du capteur peuvent dans ce cas être réalisées avec des encres suffisamment stables pour ne pas nécessiter d'encapsulation très performante. La réalisation d'au moins une partie des éléments du capteur est envisageable par impression, par exemple sur des substrats plastiques simples.

Dans un tel capteur réalisé par dépôt par impression, le matériau pyroélectrique imprimé présente plusieurs défauts inhérents aux techniques d'impression tels qu'une certaine porosité et des effets de bord générant des courants de fuite importants, entre les électrodes des capacités, pouvant empêcher le bon fonctionnement du capteur. Par exemple, pour des capteurs comprenant des capacités pyroélectriques formées d'empilements du type Au/PVDF/Pedot ou Au/PVDF/Ag, les courants de fuite sont de l'ordre d'1 µA, ce qui est trop important étant donné que les courants pyroélectriques obtenus lors des mesures sont de l'ordre du nA. Un tel courant de fuite est obtenu en raison des porosités importantes formées dans le PVDF. Par exemple, dans une couche de PVDF déposée par sérigraphie et ayant subie un recuit à 135°C pendant 20 minutes, le diamètre des porosités est de l'ordre de 5 µm. En outre, ce courant de fuite défavorise fortement l'étape de polarisation du matériau pyroélectrique devant être mise en oeuvre.

En outre, il peut arriver, suivant les conditions du procédé formant le capteur et/ou l'environnement de la salle dans laquelle le capteur est réalisé, que des poussières se déposent lors de la réalisation du capteur, pouvant créer des trous dans le matériau pyroélectrique et augmenter ainsi le risque de fuite entre les électrodes du capteur.

### EXPOSÉ DE L'INVENTION

Un but de la présente invention est de proposer un capteur de motif thermique dans lequel les courants de fuite sont réduits, notamment lorsqu'au moins une partie des éléments de ce capteur sont réalisés par impression.

Pour cela, la présente invention propose un capteur de motif thermique comportant plusieurs pixels disposés sur un substrat, chaque pixel comprenant au moins une capacité pyroélectrique formée par au moins une portion de matériau pyroélectrique disposée entre au moins une électrode inférieure et au moins une électrode supérieure, avec l'électrode inférieure disposée entre le substrat et la portion de matériau pyroélectrique, et dans lequel au moins une couche de protection diélectrique est disposée entre la portion de matériau pyroélectrique et l'électrode supérieure.

Ainsi, le capteur de motif thermique selon l'invention est muni d'une couche de protection interposée entre la portion de matériau pyroélectrique et l'électrode supérieure. Ainsi, le matériau de la couche de protection comble les porosités du matériau pyroélectrique ou les trous présents dans le matériau pyroélectrique, ce qui permet de réduire fortement les courants de fuite au sein du capteur, et améliorer ainsi la polarisation du matériau pyroélectrique.

En effet, dans un dispositif présentant des fuites de courant importantes, lors de la polarisation du matériau pyroélectrique, un claquage de la couche de matériau pyroélectrique peut se produire en raison de zones fragiles du matériau pyroélectrique. Ces zones fragiles correspondent aux zones où sont présents des porosités et/ou des trous formés par des poussières, conduisant ces zones à avoir une épaisseur effective beaucoup plus faible que les zones sans porosités ni trous. Un tel claquage peut se produire en raison des tensions importantes utilisées pour la polarisation (de l'ordre de 150V par micron d'épaisseur de matériau pyroélectrique dans le cas du PVDF) car avec de telles tensions, le courant sera plus important dans les zones de plus faible épaisseur (loi d'ohm).

De plus, même dans le cas de couches de matériau pyroélectrique qui ne claquent pas lors de la polarisation, le courant pyroélectrique généré lorsque le capteur est soumis à une différence de température n'est pas symétrique entre le chauffage et le refroidissement, et les valeurs de ce courant sont très dispersées et non cohérentes. Avec le matériau de la couche de protection présent entre la portion de matériau pyroélectrique et l'électrode supérieure, les valeurs du courant généré par le capteur sont beaucoup moins dispersées et plus cohérentes.

L'ajout de la couche de protection permet donc d'obtenir des capteurs fonctionnels et reproductibles.

En outre, le matériau de la couche de protection est diélectrique afin de garantir une bonne isolation électrique entre les électrodes inférieure et supérieure malgré la présence de porosités et/ou trous dans le matériau pyroélectrique.

Le matériau pyroélectrique peut être poreux.

La couche de protection diélectrique comporte au moins l'un des matériaux suivants : fluoropolymère, couche mono-moléculaire auto-assemblée (par exemple dans l'alcool ou l'eau), matériau diélectrique soluble dans un solvant orthogonal au matériau pyroélectrique (par exemple soluble dans l'eau). De tels matériaux diélectriques ne comportent pas de propriété pyroélectrique, ni de porosités ou trous (contrairement aux matériaux à base de PVDF déposés par impression).

Le matériau pyroélectrique peut être un matériau organique non réticulable, par exemple un copolymère tel que du P(VDF-TrFE) et/ou du PVDF, et/ou par exemple de l'AIN et/ou du PZT, et
Un solvant orthogonal au matériau correspond à un solvant qui ne dissout pas, c'est-à-dire qui ne solubilise pas, ce matériau avec lequel le solvant est en contact. Par exemple, lorsque le matériau pyroélectrique correspond à du PVDF-TrFE, le solvant utilisé ne correspond pas à du cyclopétanone, du butyrolactone ou un solvant de type cétone car de tels solvants peuvent détériorer ou dissoudre le matériau pyroélectrique.

L'épaisseur de la couche de protection diélectrique peut être comprise entre environ 10 nm et 500 nm. Avec une telle épaisseur, la couche de protection diélectrique n'impact pas le transfert de chaleur se produisant dans les pixels du capteur lors d'une mesure d'un motif thermique.

Le capteur de motif thermique peut être tel que :
- le substrat est un substrat souple comprenant au moins un matériau plastique, et/ou
- les électrodes inférieure et supérieure comportent au moins l'un des matériaux suivants : argent, or, cuivre, nickel, carbone, polymère conducteur.

De tels matériaux sont adaptés pour une réalisation au moins partielle du capteur de motif thermique par impression.

Le matériau de la couche de protection diélectrique peut comporter des nanoparticules de matériau diélectrique inorganique. La présence de telles nanoparticules permet de réduire la tension, et donc le champ électrique, à appliquer aux bornes des capacités pyroélectriques lors de la polarisation du matériau pyroélectrique.

En particulier, les nanoparticules peuvent avoir des diamètres inférieurs ou égaux à environ 50 nm, et/ou le matériau diélectrique inorganique des nanoparticules peut être un matériau pyroélectrique, et/ou la proportion en masse des nanoparticules dans la couche de protection diélectrique est inférieure ou égale à environ 6 %. De telles propriétés des nanoparticules permettent d'assurer un bon équilibre entre la réduction du niveau de tension à appliquer aux bornes des capacités pyroélectriques lors de la polarisation du matériau pyroélectrique, et le niveau des courants de fuite au sein des capacités pyroélectriques.

Chaque pixel peut comporter au moins un élément chauffant disposé sous une face avant du capteur de motif thermique. La présence d'un tel élément chauffant signifie que le capteur de motif thermique est de type actif.

En outre, le capteur de motif thermique peut être un capteur d'empreinte digitale.

L'invention porte également sur un procédé de réalisation d'un capteur de motif thermique comportant plusieurs pixels, dans lequel chaque pixel comporte au moins une capacité pyroélectrique réalisée par la mise en oeuvre des étapes suivantes :
- réalisation d'au moins une électrode inférieure sur un substrat ;
- réalisation d'au moins une portion de matériau pyroélectrique au moins sur l'électrode inférieure ;
- réalisation d'au moins une couche de protection diélectrique sur la portion de matériau pyroélectrique ;
- réalisation d'au moins une électrode supérieure sur la couche de protection diélectrique.

Outre les avantages précédemment mentionnés en lien avec la structure du capteur de motif thermique, la présence de la couche diélectrique lors de la réalisation du capteur permet de protéger la portion de matériau pyroélectrique lors de la réalisation de l'électrode supérieure.

L'électrode inférieure et/ou l'électrode supérieure et/ou la portion de matériau pyroélectrique peuvent être réalisées par des dépôts par impression, comme par exemple par sérigraphie, héliogravure, jet d'encre, flexographie, ou encore par gravure offset.

La couche de protection diélectrique peut être réalisée par dépôt en voie liquide avec au moins l'un des solvants suivants : acétate de butyle, acétate de propyle, isopropanol, éthanol, méthoxyéthanol, éthoxyéthanol, hexane, cyclohexane, eau. Avec de tels solvants, le matériau pyroélectrique sur lequel la couche de protection diélectrique est réalisée n'est pas dégradé.

La couche de protection diélectrique peut être réalisée par au moins un dépôt par impression ou par au moins un dépôt sous vide.

Le procédé peut comporter en outre la réalisation, pour chaque pixel, d'au moins un élément chauffant disposé sous une face avant du capteur de motif thermique.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente, de manière schématique, une vue en coupe d'un pixel d'un capteur de motif thermique, selon un mode de réalisation particulier de l'invention,
- les figures 2A et 2B représentent le courant de fuite dans un pixel d'un capteur de motif thermique selon l'invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

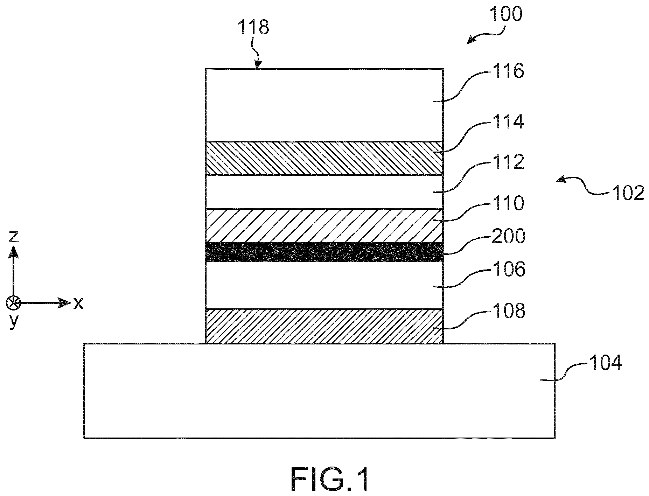

On se réfère tout d'abord à la figure 1 qui représente une vue en coupe d'un pixel 102 d'un capteur de motif thermique 100 selon un mode de réalisation particulier.

Le pixel 102 est réalisé sur un substrat 104. Le substrat 104 est ici un substrat souple à base de matériau plastique, comprenant par exemple du polyimide et/ou du PEN (poly(naphtalate d'éthylène)) et/ou du PET (poly(téréphtalate d'éthylène)), sur lequel les différents éléments du capteur 100 (capacités pyroélectriques des pixels 102, transistors en couches minces ou TFT pour « Thin Film Transistor » dans le cas d'un capteur 100 avec une matrice active, etc.), sont réalisés en technologie imprimée.

L'épaisseur du substrat 104 (dimension selon l'axe Z représenté sur la figure 1) est par exemple égale à environ 125 µm ou plus généralement comprise entre environ 50 µm et 250 µm.

Un seul pixel 102 est représenté sur la figure 1, pour plus de lisibilité, mais le capteur de motif thermique 100 comporte une pluralité de pixels 102 réalisés sur le substrat 104. Les pixels 102 du capteur de motif thermique 100 sont ici disposés en formant une matrice de plusieurs lignes et plusieurs colonnes de pixels 102. Le pas des pixels 102 (distance entre les centres de deux pixels 102 voisins), dans le plan (X,Y) (c'est-à-dire le plan du substrat 104), est par exemple compris entre environ 50 µm et plusieurs centimètres. Dans le cas d'un capteur de résolution égale à 500 dpi (« dot per inch »), le pas des pixels 102 est égal à 50,8 µm.

Chacun des pixels 102 du capteur de motif thermique 100 comporte des moyens de mesure, ou de détection, thermique formés par une capacité pyroélectrique.

Chaque capacité pyroélectrique comporte une portion de matériau pyroélectrique 106 disposée entre une électrode inférieure 108 et une électrode supérieure 110.

Le matériau pyroélectrique de la portion 106 est ici un copolymère, avantageusement du P(VDF-TrFE) et/ou du PVDF. En variante, la portion 106 peut comporter de l'AIN et/ou du PZT et/ou tout autre matériau pyroélectrique adapté pour former une capacité pyroélectrique. L'épaisseur de la portion 106 (dimension selon l'axe Z représenté sur la figure 1) est par exemple égale à environ 3 µm, et par exemple comprise entre environ 2 et 10 µm. De manière générale, le matériau pyroélectrique de la portion 106 est un matériau organique qui, en technologie imprimée, est non réticulable.

L'électrode inférieure 108 et l'électrode supérieure 110 comportent chacune au moins un matériau électriquement conducteur. Les électrodes 108, 110 peuvent comporter de l'argent, de l'or, du cuivre, du nickel, du carbone ou encore un polymère conducteur tel que du PEDOT:PSS (poly(3,4-éthylènedioxythiophène). L'épaisseur de chacune des électrodes 108, 110 est par exemple comprise entre environ 0,01 µm et 1 µm. L'épaisseur de chacune des électrodes 108, 110 peut être plus importante et être comprise entre environ 0,01 µm et 3 µm. L'épaisseur des électrodes 108, 110 est de préférence la plus petite possible pour ne pas perturber les dépôts des autres couches. Par exemple, pour des électrodes 108, 110 comprenant des métaux tels que de l'Au et/ou du Cu, déposés par évaporation, l'épaisseur de chacune des électrodes 108, 110 est avantageusement de l'ordre de 50 nm. Dans le cas d'électrodes formées par impression, cette épaisseur est par exemple comprise entre environ 500 nm et 1 µm.

L'électrode supérieure 110 et/ou l'électrode inférieure 108 sont réalisées par exemple sous la forme de lignes métalliques parallèles les unes aux autres. Ainsi, les électrodes inférieures 108 et/ou les électrodes supérieures 110 sont par exemple réalisées sous la forme de lignes ayant chacune une largeur égale à environ 40 µm et espacées les unes des autres d'une distance égale à environ 40 µm.

L'une des électrodes supérieure et inférieure 108, 110, ici l'électrode supérieure 110, est destinée à être reliée à une potentiel électrique de référence et sert également de plan de masse dans le capteur 100. L'autre électrode, c'est-à-dire ici l'électrode inférieure 108, est destinée à recevoir les charges électriques générées lors de la mesure du motif thermique par le capteur 100.

Une couche de protection 200 est disposée au sein des capacités pyroélectriques des pixels 102. Cette couche de protection 200 correspond à une couche de matériau diélectrique chargé ou non en nanoparticules, permettant de boucher les porosités ou trous du matériau pyroélectrique de la portion 106. En raison des porosités ou trous au sein du matériau pyroélectrique, et afin d'éviter la création de court-circuit entre les électrodes 108 et 110, le matériau de la couche de protection 200 est diélectrique.

La couche de protection 200 peut être réalisée avec au moins l'un des matériaux suivants :
- fluoropolymère, comme par exemple le Cytop® commercialisé par la société AGC® ;
- couche mono-moléculaire auto-assemblée, aussi appelée monocouche auto-assemblée de molécules (SAM ou "Self-assembled monolayer ») dans l'alcool ou l'eau ;
- matériau diélectrique soluble dans l'eau tel que le PVP (poly-4-vinylphénol) ;
- matériau diélectrique présent dans un solvant orthogonal au matériau de la portion 106, comme par exemple le polystyrène ou le PMMA ou le polycyclohexane.

Le matériau pyroélectrique utilisé pour former la portion 106, comme par exemple le PVDF, est un matériau organique qui n'est pas réticulable et qui, lorsqu'il est réalisé par impression, ne résiste pas au dépôt de certains solvants sur celui-ci. Ainsi, pour ne pas dégrader le matériau pyroélectrique de la portion 106 lorsque ce matériau pyroélectrique n'est pas réticulable, la couche de protection 200 peut être réalisée avec au moins l'un des solvants suivants ou un mélange de plusieurs de ces solvants : acétate de butyle, acétate de propyle, isopropanol, éthanol, méthoxyéthanol, éthoxyéthanol, hexane, cyclohexane, eau.

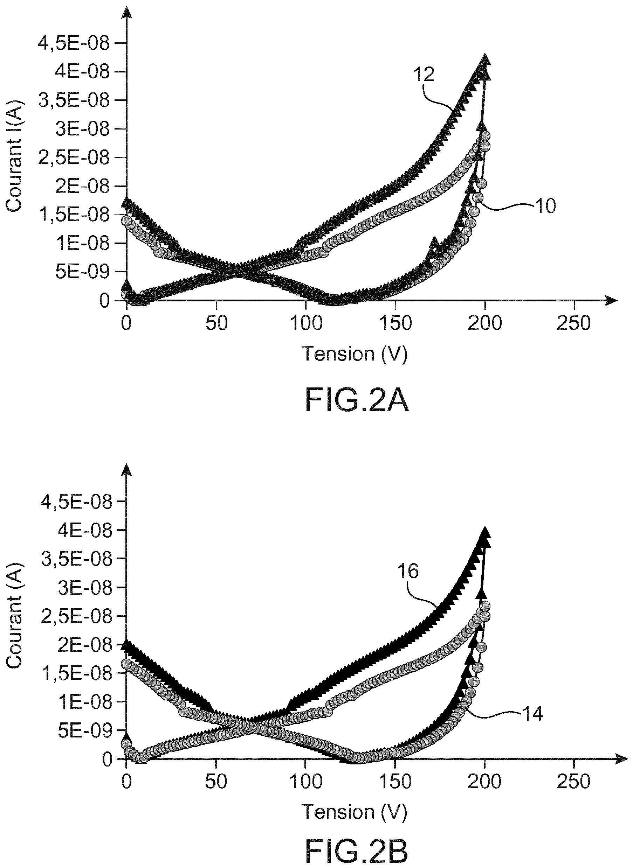

La figure 2A représente les courants de fuite obtenus lors de la polarisation de la capacité pyroélectrique du pixel 102 décrit ci-dessus. La courbe 10 correspond au courant de fuite obtenu en présence d'une couche de protection 200 d'épaisseur égale à 300 nm et comprenant du PMMA présent initialement dans de l'acétate de butyle. La courbe 12 correspond au courant de fuite obtenu en présence d'une couche de protection 200 d'épaisseur égale à 100 nm et formée de polystyrène présent initialement dans de l'acétate de butyle. Les courbes 10 et 12 sont obtenues pour une capacité pyroélectrique de surface égale à environ 10 mm².

La figure 2B représente les courants de fuite obtenus lors de la polarisation de la capacité pyroélectrique du pixel 102 décrit ci-dessus. La courbe 14 correspond au courant de fuite obtenu en présence d'une couche de protection 200 d'épaisseur égale à 300 nm et comprenant du PMMA présent initialement dans de l'acétate de butyle. La courbe 16 correspond au courant de fuite obtenu en présence d'une couche de protection 200 d'épaisseur égale à 100 nm et formée de polystyrène présent initialement dans de l'acétate de butyle. Les courbes 14 et 16 sont obtenues pour une capacité pyroélectrique de surface égale à environ 30 mm².

L'épaisseur de la couche de protection 200 est choisie telle qu'elle soit suffisante pour minimiser le courant de fuite au sein de la capacité pyroélectrique, tout en veillant à ce que le matériau pyroélectrique de la portion 106 conserve son caractère pyroélectrique et que le transfert de chaleur au sein du pixel 102 soit perturbé le moins possible. Pour cela, l'épaisseur de la couche de protection 200 est ici inférieure à environ 500 nm, par exemple comprise entre environ 50 nm et 400 nm, et avantageusement comprise entre environ 100 nm et 300 nm, et encore avantageusement de l'ordre de 100 nm. Cette épaisseur peut également être choisie telle que l'impact de cette couche de protection 200 sur le cycle d'hystérésis du matériau pyroélectrique de la portion 106 soit minime. Par exemple, pour une couche de protection 200 comprenant du PMMA présent initialement dans de l'acétate de butyle et disposée sur une portion de PVDF, l'épaisseur de la couche de protection 200 est avantageusement inférieure ou égale à environ 370 nm.

Selon un mode de réalisation avantageux, la couche de protection 200 comporte également des nanoparticules de matériau diélectrique inorganique. Les diamètres de ces nanoparticules sont par exemple inférieurs ou égaux à environ 50 nm. L'ajout de telles nanoparticules intégrées au sein du matériau de la couche de protection 200 permet de réduire la tension, et donc le champ électrique, à appliquer aux bornes du matériau pyroélectrique de la portion 106 pour le polariser. De telles nanoparticules comportent par exemple un oxyde métallique tel que de l'Al₂O₃ et/ou du TiO₂. De manière avantageuse, le matériau de ces nanoparticules présente également des propriétés pyroélectriques, comme par exemple des nanoparticules de BaTiO₃. Afin que la couche de protection 200 permette de réduire les courants de fuite, le pourcentage, en termes de masse, de nanoparticules présentes dans le matériau de la couche de protection 200 est de préférence inférieur ou égal à environ 6 %.

L'électrode supérieure 110 est recouverte par une couche diélectrique 112. L'épaisseur de la couche diélectrique 112 va par exemple de 0,1 µm à 5 µm. La couche diélectrique 112 est, par exemple, en polyimide.

Dans le mode de réalisation où le capteur de motif thermique 100 est apte à réaliser une détection thermique active, en plus des éléments précédemment décrits, le capteur 100 comporte également des éléments chauffants 114 dissipant une certaine quantité de chaleur dans les pixels 102, et notamment dans le matériau pyroélectrique de la portion 106. Le ou les matériaux servant à la réalisation de l'élément chauffant 114 de chaque pixel 102 peuvent être similaires à ceux mentionnés précédemment pour la réalisation des électrodes 108, 110. Les éléments chauffants 114 sont, par exemple, réalisés sous la forme de lignes métalliques parallèles les unes aux autres.

En variante, les éléments chauffants du capteur 100 peuvent être par exemple formés par des portions électriquement conductrices issues de la même couche que celle servant à la réalisation des électrodes supérieures 110 ou des électrodes inférieures 108.

Les éléments chauffants 114 ont, par exemple, une épaisseur allant de 0,5 µm à 10 µm, ou de 0,03 µm à 10 µm, et de préférence allant de 1 µm à 5 µm.

Chacun des éléments chauffants 114 forme un élément métallique résistif (résistance électrique par exemple comprise entre environ 10 Ω et 100 Ω) associé à un pixel 102 et qui permet de chauffer ce pixel 102. Les éléments chauffants 114 permettent, lors d'une détection mise en oeuvre par le capteur 100, de dissiper une certaine quantité de chaleur dans les pixels 102, et notamment dans le matériau pyroélectrique de la portion 106. Dans chaque pixel 102, le chauffage de la portion 106 de matériau pyroélectrique est obtenu en faisant circuler un courant dans l'élément chauffant 114 formant la résistance de chauffage de chacun des pixels 102. Afin d'obtenir une bonne sensibilité à la détection, traduisant une forte différence de températures entre un pixel en contact avec une crête de l'empreinte et un pixel en contact avec une vallée de l'empreinte, les puissances électriques injectées par les éléments chauffants 114 peuvent aller de 0,5 mW/pixel à 5 mW/pixel dans le cas de pixels ayant des côtés de dimension égale à environ 50 µm (comme c'est le cas pour un capteur d'empreinte digitale standard de résolution égale à 500 dpi).

Les éléments chauffants 114 ainsi que les parties de la couche diélectrique 112 sur lesquelles les éléments chauffants 114 ne sont pas présents sont, avantageusement, recouverts par une couche d'encapsulation 116, correspondant par exemple à une couche laminée de PET ou de tout autre matériau adapté à la réalisation de cette couche 116. D'autres matériaux sont envisageables pour cette couche 116, comme par exemple du polyimide, du PVDF et/ou ses copolymères, du PMMA, etc. Le ou les matériaux utilisés ainsi que l'épaisseur de la couche 116 sont choisis pour obtenir un bon transfert de la chaleur depuis une face avant 118 du capteur 100 vers les capacités pyroélectriques des pixels 102. Ainsi, la couche d'encapsulation 116 est réalisée telle qu'elle ne soit ni trop thermiquement résistive (car la chaleur ne la traverserait pas), ni trop thermiquement conductrice (car la chaleur partirait dans ce cas sur les côtés, vers les autres pixels, provoquant de la diathermie au sein du capteur 100), ni trop épaisse (pour avoir un transfert de chaleur s'opérant depuis la face avant 118 du capteur 100 vers la capacité pyroélectrique), ni trop fine (l'épaisseur de la couche 116 doit tout de même être suffisante pour que son rôle de protection soit rempli). L'épaisseur de la couche d'encapsulation 116 peut aller d'environ 1 micron à environ 5 µm, et est par exemple de l'ordre de 3 µm. De manière alternative, la couche d'encapsulation 116 peut correspondre à une couche de DLC (« Diamond Like Carbon ») d'épaisseur inférieure à environ 1 µm.

La face supérieure de la couche d'encapsulation 116 correspond à la surface sur laquelle se trouve le motif thermique destiné à être détecté, par exemple un doigt dont l'empreinte est destinée à être détectée.

Selon une configuration avantageuse du capteur 100, les électrodes inférieures 108 sont réalisées sous la forme de lignes conductrices parallèles entre elles et orientées selon une première direction, les électrodes supérieures 110 sont réalisées sous la forme d'une couche conductrice servant également de plan de masse, et les éléments chauffants 114 sont réalisés sous la forme de lignes conductrices parallèles entre elles et orientées selon une deuxième direction sensiblement perpendiculaire à la première direction. Vu de dessus, les intersections entre les lignes formant les électrodes inférieures 108 et celles formant les éléments chauffants 114 correspondent aux pixels 102, c'est à dire aux zones de détection par le matériau pyroélectrique des portions 106.

Le tableau ci-dessous donne un exemple de réalisation avantageux d'un pixel 102 du capteur de motif thermique 100.

| | **MATERIAU** | **EPAISSEUR** |
|---|---|---|
| **Couche d'encapsulation 116** | - PET | - Entre 3 µm et 10 µm |
| | - matériau appelé LOCTITE NCI 9001 E&C commercialisé par la société HENKEL® | - 3,7 µm |
| **Elément chauffant 114** | Ag | 1 µm |
| **Couche diélectrique 112** | Polyimide | Entre 0,2 µm et 1 µm |
| **Electrode supérieure 110** | PEDOT:PSS ou Ag | 0,6 µm |
| **Couche de protection 200** | Polystyrène, poly(vinyl cyclohexane) | 100 nm |
| **Portion pyroélectrique 106** | PVDF-TrFE | Entre 2 µm et 3 µm |
| **Electrode inférieure 108** | Au | 0,03 µm |
| **Substrat 104** | PEN | 125 µm |

Le capteur de motif thermique 100 décrit ci-dessus correspond à un capteur réalisé en technologie dite imprimée, c'est-à-dire dans lequel au moins une partie des différents éléments présents sur le substrat 104 sont déposés par la mise en oeuvre de techniques d'impression : sérigraphie, héliogravure, jet d'encre, flexographie, ou encore gravure offset, et faisant appel à des encres compatibles avec ces techniques de dépôt. Toutefois, l'ajout de la couche de protection 200 entre la portion de matériau pyroélectrique 106 et les électrodes supérieures 110 est possible également au sein d'un capteur de motif thermique 100 réalisé par la mise en oeuvre de techniques de la microélectronique, c'est-à-dire par dépôt, photolithographie et gravure.

Un exemple de procédé de fabrication du capteur de motif thermique 100 est décrit ci-dessous.

Le capteur est réalisé à partir du substrat 104. Le matériau du substrat 104 (verre, semi-conducteur, plastique, etc.) est choisi selon la technologie avec laquelle les différents éléments du capteur 100 sont réalisés. Le substrat 104 est tout d'abord nettoyé afin d'éliminer les résidus organiques présents sur celui-ci. Le type de nettoyage mis en oeuvre sera fonction du matériau du substrat 104.

La deuxième étape consiste à former sur la face avant 118 du substrat 104 les électrodes inférieures 108 par impression d'une encre électriquement conductrice (par exemple sérigraphie, pulvérisation (« spray » en anglais) ou par jet d'encre). En variante, les électrodes inférieures 108 peuvent être formées par un dépôt d'une première couche électriquement conductrice, par exemple métallique, à partir de laquelle les électrodes inférieure 108 sont réalisées par photolithographie et gravure de cette première couche. Par exemple, pour la réalisation d'électrodes inférieures 108 comportant de l'or, ces électrodes inférieures 108 sont formées en réalisant un dépôt d'une couche d'or ayant une épaisseur par exemple égale à environ 30 nm, cette couche étant ensuite photolithographiée puis gravée pour former les électrodes inférieures 108.

Le matériau pyroélectrique formant les portions 106 est ensuite déposé par impression sur les électrodes inférieures 108. En technologie non imprimée, les portions 106 sont définies par la mise en oeuvre d'une photolithographie et d'une gravure d'une couche de matériau pyroélectrique. Lorsque la gravure mise en oeuvre correspond à une gravure plasma, un plasma O₂ peut être utilisé seul ou en combinaison avec du SF₆ (hexafluorure de soufre). Les portions de matériau pyroélectrique conservées après la mise en oeuvre de cette gravure correspondent aux portions 106 du matériau pyroélectrique localisées au niveau des pixels 102 du capteur 100.

La couche de protection 200 est ensuite déposée, recouvrant notamment les portions 106 de matériau pyroélectrique. Ce dépôt peut être obtenu soit par impression d'une encre liquide, par exemple à base de polymère, soit par dépôt sous vide tel qu'un dépôt de type ALD (dépôt de couche atomique) ou PVD (dépôt physique en phase vapeur) à partir d'un matériau diélectrique inorganique comme par exemple un oxyde métallique ou un matériau tel que du SiO₂.

Les électrodes supérieures 110 sont ensuite déposées, par exemple par impression, comme précédemment décrit.

Le capteur de motif thermique 100 est achevé en déposant successivement la couche diélectrique 112, les éléments chauffants 114 et la couche d'encapsulation 116. Les éléments chauffants 114 peuvent être réalisés sous la forme de serpentins ou de lignes rectangulaires. Lorsque le matériau de la couche d'encapsulation 116 est déposé de manière localisée, comme par exemple par pulvérisation ou par jet d'encre, la couche d'encapsulation 116 est formée dès le dépôt de manière localisée sur les éléments chauffants 114 et les éventuelles parties de matériau pyroélectrique non recouvertes par les éléments chauffants 114.

Dans les différents exemples décrits précédemment, le capteur de motif thermique 100 est utilisé en tant que détecteur d'empreinte digitale. Toutefois, le capteur 100 peut être utilisé pour former un capteur d'empreinte palmaire, notamment lorsque le capteur 100 a des dimensions importantes et est réalisé par impression sur un substrat souple. Le capteur 100 peut également être adapté pour réaliser une détection de motifs thermiques autres que des empreintes digitales, du fait que chaque pixel 102 du capteur 100 lit la capacité calorifique placée au-dessus de lui et cela quelle que soit la nature du motif thermique.

En outre, l'insertion de la couche de protection 200 dans les capacités pyroélectriques du capteur 100 s'applique autant à un capteur de motif thermique 100 actif qu'à un capteur de motif thermique de type passif pouvant également être réalisé par impression.

De plus, le capteur de motif thermique 100 peut également servir à la réalisation d'un imageur infrarouge non refroidi. Les pixels 102 du capteur 100 sont dans ce cas intégrés sur un circuit intégré de type CCD ou CMOS collectant les charges électriques générées par le capteur. Un tel imageur comporte en outre une lentille infrarouge filtrant la lumière arrivant sur le capteur. Afin que le capteur 100 puisse être soumis à une différence de températures (nécessaire compte tenu de la mesure réalisée par les capacités pyroélectriques), l'imageur comporte un dispositif permettant successivement de bloquer la lumière infrarouge arrivant sur le capteur puis de laisser passer cette lumière. Un tel dispositif peut correspondre à un « chopper », c'est-à-dire une roue munie d'un trou et tournant devant le capteur. Un élément absorbeur peut être ajouté sur le matériau pyroélectrique afin d'améliorer l'absorption du rayonnement infrarouge reçu.

## Revendications

1. Capteur (100) de motif thermique comportant plusieurs pixels (102) disposés sur un substrat (104), chaque pixel (102) comprenant au moins une capacité pyroélectrique formée par au moins une portion (106) de matériau pyroélectrique disposée entre au moins une électrode inférieure (108) et au moins une électrode supérieure (110), avec l'électrode inférieure (108) disposée entre le substrat (104) et la portion (106) de matériau pyroélectrique, et dans lequel au moins une couche de protection diélectrique (200) est disposée entre la portion (106) de matériau pyroélectrique et l'électrode supérieure (110) et comporte au moins l'un des matériaux suivants : fluoropolymère, couche mono-moléculaire auto-assemblée, matériau diélectrique soluble dans un solvant orthogonal au matériau pyroélectrique.

2. Capteur (100) de motif thermique selon la revendication 1, dans lequel le matériau pyroélectrique est un matériau organique non réticulable.

3. Capteur (100) de motif thermique selon l'une des revendications précédentes, dans lequel l'épaisseur de la couche de protection diélectrique (200) est comprise entre environ 10 nm et 500 nm.

4. Capteur (100) de motif thermique selon l'une des revendications précédentes, dans lequel :
- le substrat (104) est un substrat souple comprenant au moins un matériau plastique, et/ou
- les électrodes inférieure et supérieure (108, 110) comportent au moins l'un des matériaux suivants : argent, or, cuivre, nickel, carbone, polymère conducteur.

5. Capteur (100) de motif thermique selon l'une des revendications précédentes, dans lequel le matériau de la couche de protection diélectrique (200) comporte des nanoparticules de matériau diélectrique inorganique.

6. Capteur (100) de motif thermique selon la revendication 5, dans lequel les nanoparticules ont des diamètres inférieurs ou égaux à environ 50 nm, et/ou dans lequel le matériau diélectrique inorganique des nanoparticules est un matériau pyroélectrique, et/ou dans lequel la proportion en masse des nanoparticules dans la couche de protection diélectrique (200) est inférieure ou égale à environ 6 %.

7. Capteur (100) de motif thermique selon l'une des revendications précédentes, dans lequel chaque pixel (102) comporte au moins un élément chauffant (114) disposé sous une face avant (118) du capteur (100) de motif thermique.

8. Capteur (100) de motif thermique selon l'une des revendications précédentes, dans lequel ledit capteur (100) de motif thermique est un capteur d'empreinte digitale.

9. Procédé de réalisation d'un capteur (100) de motif thermique comportant plusieurs pixels (102), dans lequel chaque pixel (102) comporte au moins une capacité pyroélectrique réalisée par la mise en oeuvre des étapes suivantes :
- réalisation d'au moins une électrode inférieure (108) sur un substrat (104) ;
- réalisation d'au moins une portion (106) de matériau pyroélectrique au moins sur l'électrode inférieure (108) ;
- réalisation d'au moins une couche de protection diélectrique (200) sur la portion (106) de matériau pyroélectrique ;
- réalisation d'au moins une électrode supérieure (110) sur la couche de protection diélectrique (200) ;
et dans lequel la couche de protection diélectrique (200) comporte au moins l'un des matériaux suivants : fluoropolymère, couche mono-moléculaire auto-assemblée, matériau diélectrique soluble dans un solvant orthogonal au matériau pyroélectrique.

10. Procédé selon la revendication 9, dans lequel l'électrode inférieure (108) et/ou l'électrode supérieure (110) et/ou la portion (106) de matériau pyroélectrique sont réalisées par des dépôts par impression.

11. Procédé selon l'une des revendications 9 et 10, dans lequel la couche de protection diélectrique (200) est réalisée par dépôt en voie liquide avec au moins l'un des solvants suivants : acétate de butyle, acétate de propyle, isopropanol, éthanol, méthoxyéthanol, éthoxyéthanol, hexane, cyclohexane, eau.

12. Procédé selon l'une des revendications 9 à 11, dans lequel la couche de protection diélectrique (200) est réalisée par au moins un dépôt par impression ou par au moins un dépôt sous vide.

13. Procédé selon l'une des revendications 9 à 12, comportant en outre la réalisation, pour chaque pixel (102), d'au moins un élément chauffant (114) disposé sous une face avant (118) du capteur (100) de motif thermique.

14. Procédé selon l'une des revendications 9 à 13, dans lequel ledit capteur (100) de motif thermique est un capteur d'empreinte digitale.
